# EUROPÄISCHE PATENTSCHRIFT

(11) **EP 1 643 123 B1**
(45) Veröffentlichungstag und Bekanntmachung des Hinweises auf die Patenterteilung: **23.02.2011**
(21) Anmeldenummer: 04023633.3
(22) Anmeldetag: 04.10.2004
(51) Int. Cl.: F04B 17/00, F16N 13/06

(54) **Automatische Schmiereinrichtung**
Automatic lubrication system
Système automatique de lubrification

(43) Veröffentlichungstag der Anmeldung: 05.04.2006
(73) Patentinhaber: Baier & Köppel GmbH & Co., 91257 Pegnitz (DE)
(72) Erfinder: Brendel, Jürgen, 91278 Pottenstein (DE)
(74) Vertreter: Zech, Stefan Markus

(56) Entgegenhaltungen:
- EP-A- 1 355 104
- DE-A1- 3 930 542
- DE-A1- 10 118 284
- FR-A- 2 698 130
- FR-A- 2 775 732
- US-A- 5 544 791

## Beschreibung

Die Erfindung betrifft eine automatische Schmiereinrichtung ausgebildet und bestimmt zur Montage an einem mittels Hydraulik-Druckmediums antreibbares Hydraulikwerkzeug als insbesondere lösbare Komponente einer Baumaschine, insbesondere zur Montage an einen Hydraulikhammer eines Baggers, wobei die Schmiereinrichtung aus einem Schmierstoffreservoir Schmierstoff über eine Schmierstoffleitung an eine oder mehrere Schmierstellen fördert umfassend eine ein Pumpenelement aufweisende Schmierstoffpumpe, wobei das Pumpenelement der Schmierstoffpumpe über einen Exzenter zyklisch beaufschlagt wird, nach dem Oberbegriff des Patentanspruchs 1. Automatische Schmiereinrichtungen für Hydraulikwerkzeuge einer Baumaschine sind hinlänglich bekannt.

Teile der Schmiereinrichtung werden dabei herkömmlicherweise allerdings zentral an der Baumaschine angeordnet, was zwar den Vorteil einer schwingungsärmeren und geschützteren Positionierung, allerdings jedoch den Nachteil sehr langer Leitungen und eines höheren Montageaufwands bei Wechsel des Hydraulikwerkzeuges gegen ein anderes Hydraulikwerkzeug bzw. Abnehmen des Hydraulikwerkzeuges oder Ansetzen des Hydraulikwerkzeuges mit sich bringt.

Von diesem Hintergrund wird bereits in der WO 02/33309 A1 eine Schmiereinrichtung, ausgebildet und bestimmt zur Montage an ein mittels Hydraulik-Druckmedium antreibbarer Hydraulikhammer als lösbare Komponente eines Baggers, gemäß dem eingangs geschilderten Aufbau vorgeschlagen. Diese vorbekannte Einrichtung weist allerdings den Nachteil auf, dass dort der das Pumpenelement antreibende Exzenter über eine lineare Hin- und Herbewegung des freien Endes eines Schaltkolbens eines Progressivverteilers unter Zwischenschaltung eines Hülsenfreilaufs angetrieben wird. Hierdurch wird eine relativ ruckartige Bewegung des Exzenters hervorgerufen, da nur die Hin-Bewegung des Schaltkolbens zum Vortrieb des Exzenters genutzt werden kann, in der Phase der Rückholung des Schaltkolbens der Exzenter dagegen zum Stillstand kommt. Auch in der Hin-Bewegung des Schaltkolbens ist die Bewegung ungleichmäßig.

Die Aufgabe der vorliegenden Erfindung besteht demgegenüber darin, eine automatische Schmiereinrichtung der eingangs genannten Art zu schaffen, bei der ein gleichmäßigerer Antrieb des Pumpenelements gewährleistet ist.

Diese Aufgabe wird mit den Merkmalen des Anspruches 1 gelöst. Vorteilhafte Weiterbildungen sind in den Unteransprüchen angegeben.

Ein Kerngedanke der vorliegenden Erfindung besteht darin, den das Pumpenelement antreibenden Exzenter mit einem Hydromotor drehmomentschlüssig in Gleichlauf anzutreiben. Es erfolgt damit im Gegensatz zum Stand der Technik keine ständig unterbrochene Bewegung des Exzenters sondern eine gleichmäßig fortschreitende. Da sich ein Hydromotor im Vergleich zur Lösung nach dem Stand der Technik durch relativ hohe Gleichlaufeigenschaften auszeichnet und ein Antrieb drehmomentschlüssig erfolgt, wird auch der Exzenter im Gleichlauf angetrieben. Insgesamt wird dadurch eine wesentlich gleichmäßigere Schmierstoffförderung gewährleistet, was insbesondere bei den erheblichen Beschleunigungs- und Vibrationskräften, die bei Befestigung einer Schmiereinrichtung am Hydraulikwerkzeug auftreten können, sinnvoll ist. Da erfindungsgemäß der Exzenter über einen kontinuierlich betriebenen Hydromotor angetrieben wird, ist ein dauerhafter Betrieb auch bei Beschleunigungskräften in der Größenordnung eines Mehrfachen der Erdbeschleunigung gewährleistet.

Nach einer ersten Ausgestaltung der Erfindung umfasst das Pumpenelement einen verschieblich gelagerten Pumpenkolben, der vom Exzenter beaufschlagt wird und eine Feder zur Rückholung des Pumpenkolbens in Richtung auf den Exzenter. Hierdurch wird der Pumpenkolben stets mit dem Exzenter in Anlage gehalten, so dass eine möglichst gleichmäßige Hin- und Herbewegung des Pumpenkolbens gewährleistet wird.

In einer alternativen Ausgestaltung umfasst das Pumpenelement ebenfalls einen verschieblich gelagerten Pumpenkolben, der am Exzenter zwangsgeführt ist und zwar in solcher Weise, dass sowohl die Vorwärtsbewegung als auch die Rückholung des Pumpenkolbens durch des Exzenter selbst bewirkt wird.

Abtriebsseitig kann der Hydromotor bevorzugtermaßen mit dem Exzenter über ein Schneckengetriebe in Wirkverbindung stehen, wobei das Schneckengetriebe in eine exzenterseitiges Zahnrad, das mit dem Exzeter koaxial und drehschlüssig gekoppelt ist, eingreifen kann.

Nach einem weiteren bevorzugten Aspekt der vorliegenden Erfindung ist innerhalb der Schmierstoffleitung, insbesondere des Pumpenelements ein Rückschlagventil zur Verhinderung eines Rücklaufs des geförderten Schmierstoffs vorgesehen.

Nach einem besonderen Aspekt der vorliegenden Erfindung ist innerhalb der Schmiereinrichtung ein Schmierstoffreservoiranschluss vorgesehen, der sowohl zur Verwendung mit marktgängigen Kartuschen als auch zur Verwendung mit einem Pressrohr ausgebildet ist. Auf diese Weise wird die erfindungsgemäße Schmiereinrichtung für eine Vielzahl von Anwendern in unterschiedlichsten Ländern ohne Benutzungseinschränkungen einsetzbar.

Zweckmäßig ist es weiterhin innerhalb der Schmierstoffleitung, insbesondere innerhalb des Pumpenelements ein Druckregelventil vorzusehen, um einen gewünschten Maximaldruck für die Schmierstoffleitung bzw. die Schmierstelle vorgeben zu können.

In einer montage- und wartungstechnisch günstigen Ausführungsform ist der Hydromotor als separate Einheit an der Schmierstoffpumpe über eine Mehrzahl von Bolzen abnehmbar befestigt. Hierdurch ist der Hydromotor sehr leicht austauschbar.

Nach einem speziellen Aspekt der vorliegenden Erfindung weist der Hydromotor eine Hauptachse A auf, die zur Achse B des Exzenters orthogonal ausgerichtet ist. Insbesondere kann die Hauptachse A des Hydromotors parallel zur Bewegungsrichtung des Pumpenkolbens der Schmierstoffpumpe ausgerichtet sein.

Um die Fördermenge des Schmierstoffs einstellen zu können, ist ein Stromregelventil vorgesehen, um den Druckfluidstrom, insbesondere das Hydrauliköl auf eine gewünschte Fliesgeschwindigkeit einstellen zu können.

Ein typischer Fördermengenbereich für die erfindungsgemäße Schmiereinrichtung liegt im Bereich von 0,5 bis 1,5 cm³/min, vorzugsweise von 0,8 bis 1,3 cm³/min. Die Fördermenge pro Hub beträgt in einer speziellen Ausführungsform der Erfindung zwischen 0,15 cm³/Hub und 0,20 cm³/Hub, vorzugsweise etwa 0,18 cm³/Hub.

Weiterhin kann an der Schmiereinrichtung noch eine Anzeigeeinrichtung vorgesehen sein, um den aktuellen Füllstand der Schmierstoffreserve anzuzeigen. Eine derartige Anzeigeeinrichtung kann kontinuierlich den jeweils aktuellen Füllstand anzeigen und/oder die Unterschreitung des Füllstandes unter einen Mindestrestfüllstand sichtbar machen. Eine derartige Füllstandsanzeige kann rein visuell durch ein Sichtfenster, eine Skala, einen Anzeigestift, der über Annäherung des Kolbens eines Pressrohrs und/oder einer Kartusche betätigt wird, und/oder durch elektrische Übertragungsmittel zur Weiterleitung eines Füllstandssignals an eine Auswerteinrichtung erfolgen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert:

Hierbei zeigen
- Fig. 1: einen mit einem Hydraulikhammer mit eigener Schmiereinrichtung ausgestatteten Bagger
- Fig. 2: eine Ausführungsform einer Schmiereinrichtung nach der Erfindung in Teilschnittansicht
- Fig. 3: eine vergrößerte Teilansicht aus Fig. 2
- Fig. 4: eine Schnittansicht durch die in Fig. 2 veranschaulichte Schmiereinrichtung entlang der Linie IV-IV in Fig. 2

- Fig. 5: eine Teilquerschnittansicht der Schmiereinrichtung nach Fig. 2 in einer hierzu orthogonalen Ansicht
- Fig. 6: eine gegenüber der Ausführungsform nach Fig. 2 modifizierte Ausführungsform der Schmiereinrichtung nach der Erfindung
- Fig. 7: eine perspektivische Ansicht der Ausführungsform der Schmiereinrichtung nach Fig. 2

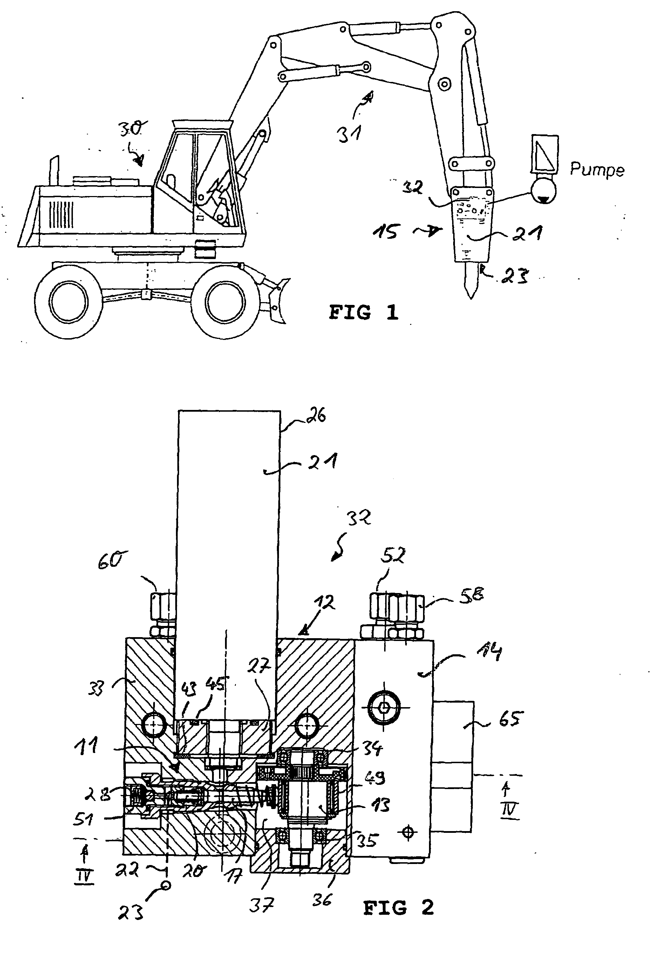

In Fig. 1 ist ein typischer Anwendungsfall der erfindungsgemäßen Schmiereinrichtung veranschaulicht. An einer Baumaschine 30, die hier konkret als Bagger dargestellt ist, ist an einem Ausleger 31 ein Hydraulikwerkzeug 15 befestigt, das mit einer Schmiereinrichtung 32 nach der Erfindung ausgestattet ist. Der dargestellte Hydraulikhammer (Meißel) ist hohen mechanischen Belastungen ausgesetzt und muss mit hitzebeständigem Spezialschmierstoff versorgt werden. Die nachfolgend konkret veranschaulichten Ausführungsbeispiele der erfindungsgemäßen Schmieranlage sind auch zur Verwendung mit Spezialschmierstoffen mit hohen Feststoffanteilen wie z. B. Kupfer-Meißel-Paste oder zur Verwendung mit EP2-Fett ausgelegt.

Der Einbau der erfindungsgemäßen Schmiereinrichtung 32 erfolgt am Hydraulikwerkzeug 15 oder dessen Trägergerät selbst, wodurch lange Schmierleitungen zur Baumaschine entfallen. Weiterhin können durch die direkte Montage der Schmiereinrichtung 32 Meißel und Schmiereinrichtung als Kompletteinheit an jedem Bagger angesetzt werden, da der Einbau in den Bagger entfällt. Die erfindungsgemäße Schmiereinrichtung wird durch die erheblichen Vibrationen und/oder Beschleunigungen des Hydraulikhammers nicht beeinträchtigt.

Die erfindungsgemäße Schmiereinrichtung muss lediglich über einen Hochdruckschlauch an das Druckfluidsystem der Baumaschine 30 angeschlossen werden, um die Schmiereinrichtung 32 mit Energie zu versorgen. Der Antrieb einer Schmierstoffpumpe 12 der Schmiereinrichtung 32 erfolgt über einen Hydromotor 14, der an den Hydraulikkreislauf der Baumaschine 30 angeschlossen wird. Beispielsweise bei Betätigung des Fußschalters für das Hydraulikwerkzeug 15 im Führerstand der Baumaschine 30 wird auch die Schmiereinrichtung 32 mit Hydraulikfluid zum Antrieb des Hydromotors 14 versorgt, so dass eine gewünschte Schmierstoffförderung einsetzt.

Eine konkret bevorzugte Ausführungsform wird nachfolgend anhand der Fig. 2 bis 5 erläutert. Die hier dargestellte Ausführungsform der erfindungsgemäßen Schmiereinrichtung 32 weist einen modularen Aufbau auf, umfassend eine Einheit, welche den bereits erwähnten Hydromotor 14 einschließt (Hydromotor-Einheit) sowie eine benachbarte Einheit, welche die Schmierstoffpumpe 12 mit einem Exzenter 13 sowie einem Pumpenelement 11 umfasst (Schmierstoffpumpen-Einheit).

Die die Schmierstoffpumpe 12 umfassende Einheit weist zunächst einen blockförmigen Grundkörper 33 auf, an dem die Einheit des Hydromotors 14, der auch einen zu Wartungszwecken abnehmbaren Deckel 65 umfasst, über mehrere Bolzen 16 angeflanscht ist.

Im Grundkörper 33 sind der bereits erwähnte Exzenter 13 um eine Hauptachse B drehbar sowie das bereits erwähnte Pumpenelement 11 in einer Richtung senkrecht zur Hauptachse B des Exzenters 13 verschieblich gelagert. Der Exzenter 13 ist dabei in einer endseitig über einen Deckel 36 verschließbaren Exzenter-Ausnehmung 37 untergebracht und in zwei Drehlagen 34, 35 gelagert. Das Pumpenelement 11 wird in einer Pumpenelement-Bohrung 38 beherbergt, die endseitig in die Exzenter-Ausnehmung 37 mündet. Ein Schmiermittelreservoiranschluss 24 steht über eine Anschlussbohrung 39 mit der Pumpenelement-Bohrung 38 in Verbindung. Weiter weist die Pumpenelement-Bohrung 38 noch eine Schmierstoffauslass-Öffnung 40 auf, an die sich eine Schmierstoffleitung 22 anschließt und Schmierstoff an eine Schmierstelle 23 leitet.

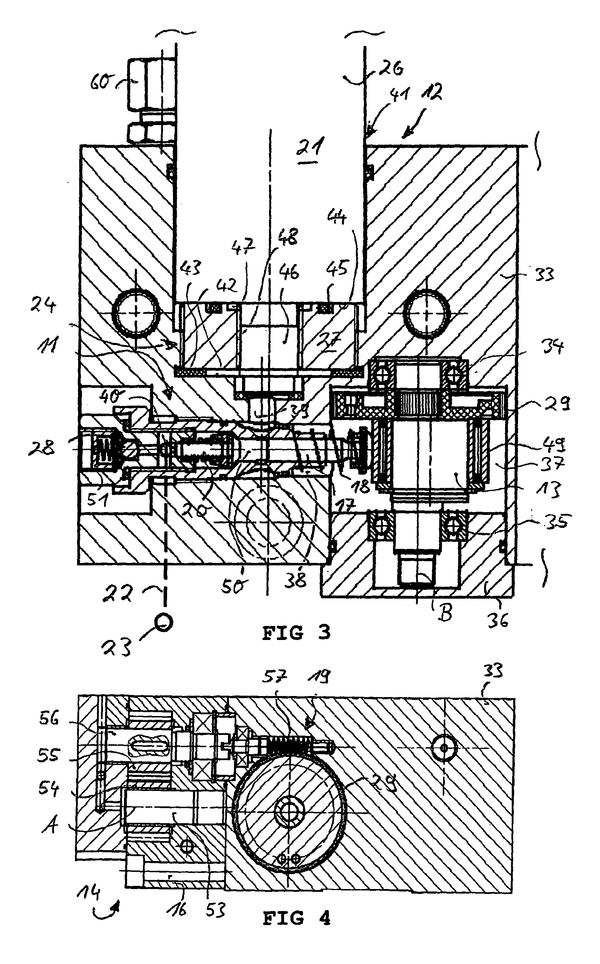

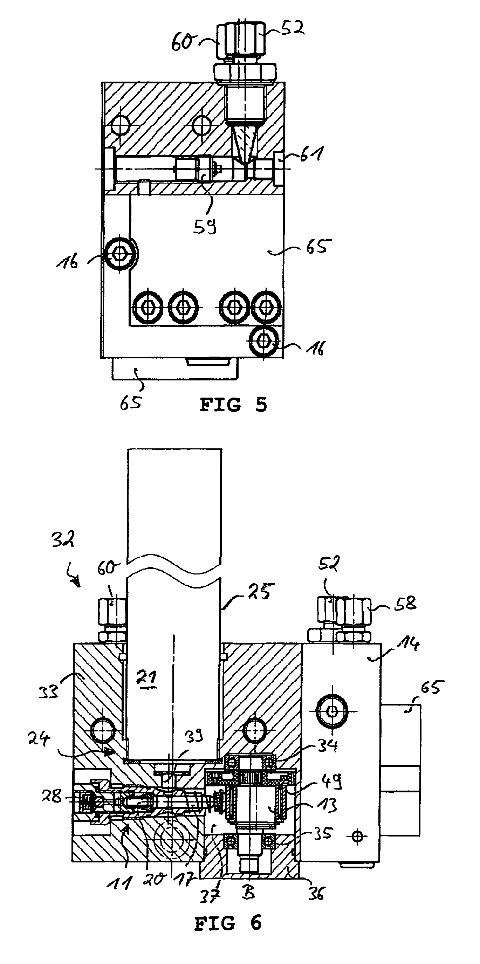

Über den Schmierstoffreservoiranschluss 24 lassen sich verschiedene Arten eines Schmierstoffreservoirs 21 anschließen, wobei in der Schnittansicht nach den Fig. 2 und 3 eine Kartusche 26 und in der Schnittansicht nach Fig. 6 ein Pressrohr 25 als Schmierstoffreservoir 21 angeschlossen ist.

Nach einem besonderen Aspekt der vorliegenden Erfindung ist der Schmierstoffreservoiranschluss 24 sowohl zur Verwendung mit einem anhand der Fig. 6 veranschaulichten Pressrohr 25 als auch zur Verwendung mit einer marktgängigen Kartusche, wie beispielsweise in den Fig. 2 und 3 veranschaulicht, ausgebildet. Hierzu ist im Grundkörper 33 eine topfförmige Ausnehmung 41 vorgesehen, die eine Grundfläche 42 aufweist, von der aus sich die bereits erwähnte Anschluss-Bohrung 39 zur Pumpenelement-Bohrung 38 hin erstreckt. Randseitig ist an der Grundfläche 42 eine kreisförmig umlaufende Dichtung 43 vorgesehen, so dass ein Pressrohr 25 (vgl. Fig. 6) oder der Adapter 27 (vg. Fig. 2 und 3) dichtend eingesetzt werden kann. Der Adapter 27 selbst ist mit einem Kartuschenanschluss 44 versehen und weist ebenfalls zur Abdichtung gegenüber der Kartusche 26 eine umlaufende Dichtung 45 auf. Der Adapter 27 lässt sich mittels einer mit einer Innenbohrung 46 versehenen Schraube 47 in einem Innengewindeabschnitt 48 innerhalb der Anschlussbohrung 39 festschrauben.

Wahlweise kann damit in der Schmierstoffpumpe ein Pressrohr 25 oder eine handelsübliche Kartusche 26 bei vorherigem Einsetzen des Adapters 27 verwendet werden.

Nachfolgend werden Aufbau und Funktionsweise des Pumpenelements 11 näher beschrieben. Das Pumpenelement 11 wird vom Exzenter 13 über eine mantelseitige Exzenterfläche 49 angetrieben. Bei Rotation des Exzenters 13 schiebt die Exzenterfläche 49 einen Pumpenkolben 17 des Pumpenelements 11 zyklisch vor, wobei der Pumpenkolben 17 über eine Feder 18 in Anlage an die Exzenterfläche 49 gehalten wird, so dass der Pumpenkolben 17 im Ergebnis eine gleichmäßige Hin- und Herbewegung bei Drehung des Exzenters 13 vollführt. Wird der Pumpenkolben 17 durch die Feder 18 in eine zurückgeholte Position gebracht, wird gleichzeitig Schmierstoff über die Anschlussbohrung 39 in ein Pumpvolumen 50 innerhalb des Pumpenelements 11 gesaugt. Wird der Pumpenkolben 17 dann von der Exzenterfläche 49 nach vorne geschoben, drückt er den Schmierstoff gegen ein Rückschlagventil 20 aus dem Pumpvolumen 50 über die Schmierstoffauslass-Öffnung 40 in die Schmierstoffleitung 22 bzw. an die Schmierstelle 23.

Um zu gewährleisten, dass der Druck in der Schmierstoffleitung 22 bzw. an der Schmierstelle 23 nicht über einen gewünschten Maximaldruck ansteigt, ist stromabwärts des Rückschlagventils 20 ein Druckregelventil 28 angeordnet, das sich über eine Stellschraube 51 auf einen gewünschten Maximaldruck einstellen lässt.

Nachfolgend wird der Antrieb des Exzenters 13 näher erläutert: An der Baumaschine bereitgestelltes Druckfluid, insbesondere Hydrauliköl strömt über einen Druckfluideinlass 52 in den Hydromotor 14 ein, treibt dort eine erste Hydromotorwelle 53 an, die über ein drehmomentfest angeordnetes erstes Zahnrad 54 über ein zweites Zahnrad 55 eine zweite Hydromotorwelle 56 antreibt, und tritt am Druckfluidauslass 58 wieder aus dem Hydromotor 14 aus. Die zweite Hydromotorwelle 56 ist axial und drehschlüssig mit einem Schneckengetriebe 19 verbunden. Das Schneckengetriebe 19 ragt aus dem Gehäuse des Hydromotors 14 vor und greift in eine Antriebsbohrung 57 des Grundkörpers 33 derart ein, dass es mit einem exzenterseitigen Zahnrad 29 zahnt, das drehmomentschlüssig den Exzenter 13 treibt.

Durch den vorbeschriebenen Aufbau wird ein sehr gleichmäßiger Antrieb des Exzenters 13 gewährleistet.

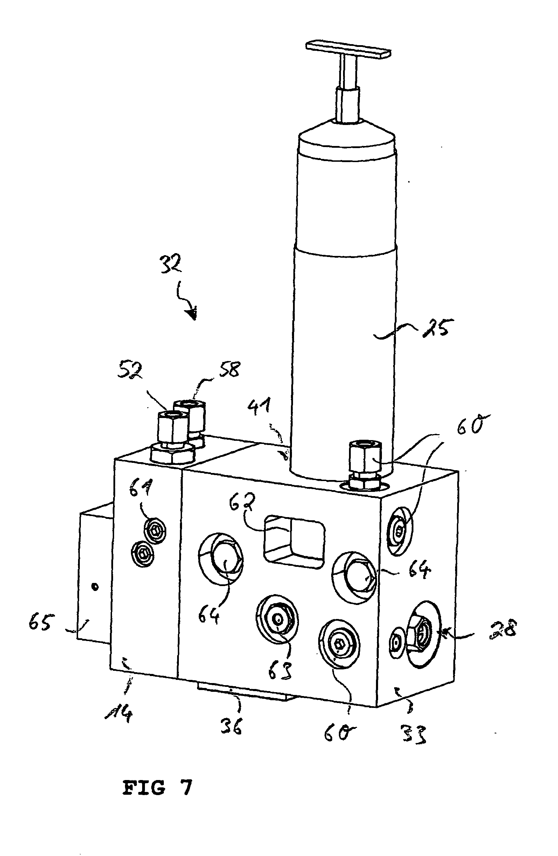

In Fig. 7 ist eine perspektivische Ansicht der Schmiereinrichtung 32 nach Fig. 2 dargestellt. Das Stromregelventil 59 des Hydromotors 14 ist durch eine Verschlusskappe 61 überdeckt. Die gesamte Schmiereinrichtung 32 lässt sich über Befestigungsschrauben 64 an einem Hydraulikwerkzeug 15 befestigen. Wegen der erheblichen Beschleunigungen und Vibrationen ist die Befestigung der Schmiereinrichtung am Hydraulikwerkzeug bzw. Trägergerät des Hydraulikwerkzeuges sehr kritisch. Zur Sicherung gegen Lösen der Befestigungsschrauben 64 können spezielle Sicherungsscheiben Verwendung finden. Zusätzlich kann das Gewinde der beiden Befestigungsschrauben 64 beschichtet sein. Eine Mehrzahl von Schmierstoffanschlüssen 60 ermöglichen den Anschluss von Schmierstoffleitungen an Schmierstellen.

Innerhalb des Grundkörpers 33 ist eine Kontrollausnehmung 62, die in die topfförmige Ausnehmung 41 mündet, vorgesehen. Dies ermöglicht bei transparenten Kartuschen eine Füllstandskontrolle. Hier ist in die Ausnehmung 41 ein Pressrohr 25 eingesetzt. Weiterhin kann eine Anzeigeeinrichtung 63, hier konkret in Form eines Stiftes vorgesehen sein, in der bei niedrigen Füllstand der Kartusche bzw. des Pressrohrs vortritt und so den niedrigen Füllstand bzw. den bald notwendigen Austausch der Kartusche bzw. Nachfüllen des Pressrohrs anzeigt.

### Bezugszeichenliste

- 11: Pumpenelement
- 12: Schmierstoffpumpe
- 13: Exzenter
- 14: Hydromotor
- 15: Hydraulikwerkzeug
- 16: Bolzen
- 17: Pumpenkolben
- 18: Feder
- 19: Schneckengetriebe
- 20: Rückschlagventil
- 21: Schmierstoffreservoir
- 22: Schmierstoffleitung
- 23: Schmierstellen
- 24: Schmierstoffreservoiranschluss
- 25: Pressrohr
- 26: Kartusche
- 27: Adapter
- 28: Druckregelventil
- 29: exzenterseitiges Zahnrad
- 30: Baumaschine
- 31: Ausleger
- 32: Schmiereinrichtung
- 33: Grundkörper
- 34, 35: Drehlager
- 36: Deckel (Exzenter)
- 37: Exzenter-Ausnehmung
- 38: Pumpenelement-Bohrung
- 39: Anschluss-Bohrung
- 40: Schmierstoffauslass-Öffnung
- 41: topfförmige Ausnehmung
- 42: Grundfläche
- 43: Dichtung
- 44: Kartuschenanschluss
- 45: Dichtung
- 46: Innenbohrung
- 47: Schraube
- 48: Innengewindeabschnitt
- 49: Exzenterfläche
- 50: Pumpenvolumen
- 51: Stellschraube
- 52: Druckfluideinlass
- 53: erste Hydromotorwelle
- 54: erstes Zahnrad
- 55: zweites Zahnrad
- 56: zweite Hydromotorwelle
- 57: Antriebsbohrung
- 58: Druckfluidauslass
- 59: Stromregelventil
- 60: Schmierstoffanschluss
- 61: Verschlusskappe
- 62: Kontrollausnehmung
- 63: Anzeigeeinrichtung
- 64: Befestigungsschrauben
- 65: Deckel (Hydromotor)

## Patentansprüche

1. Automatische Schmiereinrichtung ausgebildet und bestimmt zur Montage an ein mittels Hydraulik-Druckmediums antreibbares Hydraulikwerkzeug (15) als lösbare Komponente einer Baumaschine (30), zur Montage an einen Hydraulikhammer eines Baggers, so dass eine an einen Bagger ansetzbare Kompletteinheit bestehend aus Schmiereinrichtung und Hydraulikwerkzeug definiert ist, wobei die Schmiereinrichtung aus einem Schmierstoffreservoir (21) Schmierstoff über eine Schmierstoffleitung (22) an eine oder mehrere Schmierstellen (23) fördert, umfassend:
- eine ein Pumpenelement (11) aufweisende Schmierstoffpumpe (12),
- wobei das Pumpenelement (11) der Schmierstoffpumpe (12) über einen Exzenter (13) zyklisch beaufschlagt wird,
**dadurch gekennzeichnet,**
**dass** der Exzenter (13) mit einem Hydromotor (14) drehmomentschlüssig im Gleichlauf in Wirkverbindung steht, und über diesen kontinuierlich betriebenen Hydromotor angetrieben wird.

2. Schmiereinrichtung nach Anspruch 1,
**dadurch gekennzeichnet,**
**dass** das Pumpenelement (11) einen verschieblich gelagerten Pumpenkolben (17), der vom Exzenter (13) beaufschlagt wird, und eine Feder (18) zur Rückholung des Pumpenkolbens (17) in Richtung auf den Exzenter (13), umfasst.

3. Schmiereinrichtung nach Anspruch 1,
**dadurch gekennzeichnet,**
**dass** das Pumpenelement (11) einen verschieblich gelagerten Pumpenkolben (17) umfasst, wobei der Pumpenkolben (17) am Exzenter (13) zwangsgeführt ist, derart, dass Vor- und Rückholung des Pumpenkolbens durch den Exzenter (13) bewirkt werden.

4. Schmiereinrichtung nach einem der Ansprüche 1 bis 3,
**dadurch gekennzeichnet,**
**dass** der Exzenter (13) mit dem Hydromotor (14) über ein Schneckengetriebe (19) in Wirkverbindung steht.

5. Schmiereinrichtung nach einem der Ansprüche 1 bis 4,
**dadurch gekennzeichnet,**
**dass** innerhalb der Schmierstoffleitung (22), insbesondere innerhalb des Pumpenelements (11) ein Rückschlagventil (20) vorgesehen ist zur Verhinderung eines Rücklaufs des geförderten Schmierstoffs.

6. Schmiereinrichtung nach einem der Ansprüche 1 bis 5,
**dadurch gekennzeichnet,**
**dass** an der Schmierstoffpumpe (12) ein Schmierstoffreservoiranschluss (24) vorgesehen ist, der zur Verwendung mit einem Pressrohr (25) ausgebildet ist.

7. Schmiereinrichtung nach einem der Ansprüche 1 bis 6,
**dadurch gekennzeichnet,**
**dass** an der Schmierstoffpumpe (12) ein Schmierstoffreservoiranschluss (24) vorgesehen ist, der zur Verwendung mit einer vorgegebenen Kartusche (26) ausgebildet ist.

8. Schmiereinrichtung nach einem der Ansprüche 6 und 7,
**dadurch gekennzeichnet,**
**dass** an der Schmierstoffpumpe (12) ein Schmierstoffreservoiranschluss (24) vorgesehen ist, der - ggf. unter Einsatz von Adaptern (27) - zur Verwendung sowohl mit einem Pressrohr (25) als auch mit einer vorgegebenen Kartusche (26) ausgebildet ist.

9. Schmiereinrichtung nach einem der Ansprüche 1 bis 8,
**dadurch gekennzeichnet,**
**dass** innerhalb der Schmierstoffleitung (22), insbesondere innerhalb des Pumpenelements (11) ein Druckregelventil (28) vorgesehen ist.

10. Schmiereinrichtung nach einem der vorhergehenden Ansprüche,
**dadurch gekennzeichnet,**
**dass** der Hydromotor (14) als separate Einheit an der Schmierstoffpumpe (12) über eine Mehrzahl von Bolzen (16) abnehmbar befestigt ist.

11. Schmiereinrichtung nach einem der Ansprüche 1 bis 10,
**dadurch gekennzeichnet,**
**dass** der Hydromotor (14) eine Hauptachse A aufweist, die zur Achse B des Exzenters (13) orthogonal ausgerichtet ist.

12. Schmiereinrichtung nach einem der Ansprüche 1 bis 11,
**dadurch gekennzeichnet,**
**dass** am Hydromotor (14) ein Stromregelventil (59) vorgesehen ist, um den Fluidstrom des den Hydromotor (14) antreibenden Druckfluids und damit die Schmierstoff-Fördermenge einstellen zu können.

13. Schmiereinrichtung nach einem der Ansprüche 1 bis 12,
**dadurch gekennzeichnet,**
**dass** eine Anzeigeeinrichtung (63) vorgesehen ist, um den aktuellen Füllstand des Schmierstoffreservoirs (21) anzuzeigen.

## Claims

1. An automatic lubricating device configured and intended for being mounted to a hydraulic tool (15), which can be driven by means of a hydraulic-pressure medium, as a removable component of a building machine (30), for being mounted to a hydraulic hammer of an excavator so that a complete unit consisting of the lubricating means and the hydraulic tool is defined which can be attached to an excavator, wherein the lubricating means conveys lubricant from a lubricant reservoir (21) via a lubricant line (22) to one or more lubricating sites (23), comprising:
- a lubricant pump (12) comprising a pump element (11),
- wherein the pump element (11) of the lubricant pump (12) is cyclically acted upon via a cam (13),
**characterized in that**
the cam (13) is in torque interaction in synchronization with a hydraulic motor (14) and is driven by said continuously driven hydraulic motor.

2. The lubricating device according to claim 1,
**characterized in that**
the pump element (11) comprises a pump plunger (17) supported to be displaceable and being acted upon by the cam (13), and a spring (18) for returning the pump plunger (17) in the direction toward the cam (13).

3. The lubricating device according to claim 1,
**characterized in that**
the pump element (11) comprises a pump plunger (17) supported to be displaceable, wherein the pump plunger (17) is forcibly guided on the cam (13) in such a manner that the cam (13) causes the pump plunger to advance and return.

4. The lubricating device according to any one of claims 1 to 3,
**characterized in that**
the cam (13) is operatively connected with the hydraulic motor (14) via a worm gear (19).

5. The lubricating device according to any one of claims 1 to 4,
**characterized in that**
a check valve (20) is provided within the lubricant line (22), in particular within the pump element (11), for preventing the conveyed lubricant from returning.

6. The lubricating device according to any one of claims 1 to 5,
**characterized in that**
a lubricant reservoir connection (24) is provided on the lubricant pump (12) and is formed to be used with a presspipe.

7. The lubricating device according to any one of claims 1 to 6,
**characterized in that**
a lubricant reservoir connection (24) is provided on the lubricant pump (12) and is formed to be used with a predefined cartridge (26).

8. The lubricating device according to any one of claims 6 and 7,
**characterized in that**
a lubricant reservoir connection (24) is provided on the lubricant pump (12) and is formed to be used both with a presspipe (25) and a predefined cartridge (26), if need be using adapters (27).

9. The lubricating device according to any one of claims 1 to 8,
**characterized in that**
a pressure regulating valve (28) is provided within the lubricant line (22), in particular within the pump element (11).

10. The lubricating device according to any one of the preceding claims,
**characterized in that**
the hydraulic motor (14) is releasably fixed to the lubricant pump (12) via a plurality of bolts (16) as a separate unit.

11. The lubricating device according to any one of claims 1 to 10,
**characterized in that**
the hydraulic motor (14) has a main axis A oriented to be orthogonal to the axis B of the cam (13).

12. The lubricating device according to any one of claims 1 to 11,
**characterized in that**
a flow regulating valve (59) is provided on the hydraulic motor (14) to allow the fluid flow of the pressure fluid driving the hydraulic motor (14) and hence the lubricant delivery volume to be adjusted.

13. The lubricating device according to any one of claims 1 to 12,
**characterized in that**
a display means (63) is provided for displaying the actual filling level of the lubricant reservoir (21).

## Revendications

1. Dispositif de lubrification automatique conçu pour et destiné à être monté comme composant amovible d'un engin de chantier (30) sur un outil hydraulique (15) pouvant être entraîné au moyen d'un fluide hydraulique sous pression, à être monté sur un marteau hydraulique d'une pelleteuse de sorte qu'une unité complète rattachable à la pelleteuse et constituée du dispositif de lubrification et de l'outil hydraulique soit définie, le dispositif de lubrification délivrant du lubrifiant à un ou plusieurs points de lubrification (23) à partir d'un réservoir de lubrifiant (21) via une conduite de lubrifiant (22), comportant :
- une pompe à lubrifiant (12) présentant un élément de pompe (11),
- l'élément de pompe (11) de la pompe à lubrifiant (12) étant mis sous pression de façon cylique via un excentrique (13),
**caractérisé en ce que**
l'excentrique (13) est en liaison active avec un hydromoteur (14) de manière solidaire en couple et synchronisée, et est entraîné par ledit hydromoteur fonctionnant en continu.

2. Dispositif de lubrification selon la revendication 1,
**caractérisé en ce que**
l'élément de pompe (11) comporte un piston de pompe (17) logé en translation qui est mis sous pression par l'excentrique (13), et un ressort (18) pour le rappel du piston de pompe (17) en direction de l'excentrique (13).

3. Dispositif de lubrification selon la revendication 1,
**caractérisé en ce que**
l'élément de pompe (11) comporte un piston de pompe (17) logé en translation, le piston de pompe (17) étant en guidage forcé sur l'excentrique (13) de telle façon que l'avance et le rappel du piston de pompe sont provoqués par l'excentrique (13).

4. Dispositif de lubrification selon l'une des revendications 1 à 3,
**caractérisé en ce que**
l'excentrique (13) est en liaison active avec l'hydromoteur (14) via un engrenage à vis sans fin (19).

5. Dispositif de lubrification selon l'une des revendications 1 à 4,
**caractérisé en ce que**
une vanne anti-retour (20) est prévue à l'intérieur de la conduite de lubrifiant (22), en particulier à l'intérieur de l'élément de pompe (11), pour empêcher un retour du lubrifiant délivré.

6. Dispositif de lubrification selon l'une des revendications 1 à 5,
**caractérisé en ce que**
un raccord de réservoir de lubrifiant (24) qui est conçu pour être employé avec un tube extrudé (25) est prévu sur la pompe à lubrifiant (12).

7. Dispositif de lubrification selon l'une des revendications 1 à 6,
**caractérisé en ce que**
un raccord de réservoir de lubrifiant (24) qui est conçu pour être employé avec une cartouche prédéfinie (26) est prévu sur la pompe à lubrifiant (12).

8. Dispositif de lubrification selon l'une des revendications 6 et 7,
**caractérisé en ce que**
un raccord de réservoir de lubrifiant (24) qui est conçu pour être employé - éventuellement par le biais d'adaptateurs (27) - aussi bien avec un tube extrudé (25) qu'avec une cartouche prédéfinie (26) est prévu sur la pompe à lubrifiant (12).

9. Dispositif de lubrification selon l'une des revendications 1 à 8,
**caractérisé en ce que**
une vanne de régulation de pression (28) est prévue à l'intérieur de la conduite de lubrifiant (22), en particulier à l'intérieur de l'élément de pompe (11).

10. Dispositif de lubrification selon l'une des revendications précédentes,
**caractérisé en ce que**
l'hydromoteur (14) est fixé comme unité distincte de manière amovible sur la pompe à lubrifiant (12) via une multitude de boulons (16).

11. Dispositif de lubrification selon l'une des revendications 1 à 10,
**caractérisé en ce que**
l'hydromoteur (14) présente un axe principal A qui est perpendiculaire à l'axe B de l'excentrique (13).

12. Dispositif de lubrification selon l'une des revendications 1 à 11,
**caractérisé en ce que**
une vanne de régulation de débit (59) est prévue sur l'hydromoteur (14) pour permettre de régler le débit du fluide sous pression qui entraîne l'hydromoteur (14) et donc la quantité délivrée de lubrifiant.

13. Dispositif de lubrification selon l'une des revendications 1 à 12,
**caractérisé en ce que**
un dispositif d'affichage (63) est prévu pour afficher le niveau effectif du réservoir de lubrifiant (21).
